# DEMANDE DE BREVET EUROPEEN

(11) **EP 2 631 509 A1**
(43) Date de publication de la demande: **28.08.2013**
(21) Numéro de dépôt: 13156149.0
(22) Date de dépôt: 21.02.2013
(51) Int. Cl.: F16H 57/033, F16H 1/16

(54) **Ensemble de réducteurs**

(30) Priorité: 22.02.2012 FR 1251594
(71) Demandeur: Moteurs Leroy-Somer, 16000 Angouleme (FR)
(72) Inventeur: Duprat, Christian, 16400 PUYMOYEN (FR); Collet, Cédric, 16410 DIRAC (FR); Donnary, Dominique, 16440 NERSAC (FR); Fouillet, Patrice, 16430 CHAMPNIERS (FR)
(74) Mandataire: Nony

(57) **Abrégé**

La présente invention concerne un ensemble d'au moins un premier (10) et un deuxième (20) réducteur comportant chacun un carter (11 ; 21), un arbre d'entrée (13 ; 23) et un arbre de sortie (16 ; 26), les arbres d'entrée et de sortie étant guidés dans leur mouvement relativement au carter, ensemble caractérisé par le fait que les deux carters présentent chacun au moins une face d'assemblage (12 ; 22) avec l'autre carter, dépourvue de bride et configurée de façon à permettre le montage en série des réducteurs et la reprise du couple d'un carter à l'autre.

## Description

La présente invention concerne les réducteurs utilisés pour accroître le couple fourni par des moteurs électriques et/ou bénéficier d'un entraînement dans une direction différente de celle de l'arbre du moteur.

On connaît des réducteurs axiaux ou orthogonaux, comportant un carter et, mobiles en rotation relativement à ce carter, un arbre d'entrée dit arbre primaire et un arbre de sortie. Des moyens de transmission relient l'arbre d'entrée à l'arbre de sortie de façon à obtenir la démultiplication souhaitée entre les deux. Ces moyens de transmission comportent par exemple une roue tournant avec l'arbre de sortie et engrènant sur une vis sans fin tournant avec l'arbre d'entrée.

Il est parfois nécessaire de disposer plusieurs réducteurs en série de façon à obtenir un rapport de réduction souhaité et/ou bénéficier d'un arbre de sortie, pour l'ensemble, qui soit dans une direction prédéfinie.

Le montage en série de plusieurs réducteurs se fait conventionnellement à l'aide de brides d'accouplement vissées sur les carters, lesquelles sont relativement longues à monter, sont encombrantes et ajoutent au coût de l'ensemble.

Il existe par conséquent un besoin pour perfectionner encore les réducteurs et notamment permettre la combinaison de deux réducteurs d'une façon fiable, rapide, peu coûteuse et pratique.

L'invention y parvient grâce à un ensemble d'au moins un premier et un deuxième réducteur comportant chacun un carter, un arbre en entrée et un arbre en sortie, les arbres d'entrée et de sortie étant guidés dans leur mouvement relativement au carter, l'ensemble étant caractérisé par le fait que les deux carters présentent chacun au moins une face d'assemblage avec l'autre carter, dépourvue de bride d'assemblage et configurée de façon à permettre le montage en série des réducteurs et la reprise du couple d'un carter à l'autre.

L'arbre d'entrée du deuxième réducteur peut être plein et en saillie (respectivement en creux), l'arbre de sortie du premier réducteur étant alors creux (respectivement plein et en saillie) et adapté à recevoir (respectivement à s'engager dans) l'arbre d'entrée du deuxième réducteur.

La reprise du couple entre les carters s'effectue de préférence grâce à une ou plusieurs goupilles engagées dans des logements en regard des faces d'assemblage.

Le serrage entre les faces d'assemblage s'effectue avantageusement par l'intermédiaire d'une vis engagée dans l'arbre d'entrée du deuxième réducteur (respectivement dans l'arbre de sortie du premier réducteur) et venant en appui, directement ou indirectement, sur l'arbre de sortie du premier réducteur (respectivement sur l'arbre d'entrée du deuxième réducteur).

Un joint d'étanchéité s'interpose de préférence entre les faces d'assemblage. Le joint d'étanchéité présente de préférence également des trous pour le passage des goupilles 40.

Les premier et deuxième réducteurs peuvent être de tailles inégales, le deuxième réducteur, entraîné par le premier, étant de plus grandes dimensions.

Le premier réducteur peut être maintenu en porte-à-faux par le deuxième réducteur.

Les premier et deuxième réducteurs peuvent être chacun à sortie orthogonale.

Les premier et deuxième réducteurs peuvent être des réducteurs hélicoïdaux.

Le premier réducteur peut comporter une bride pour l'assemblage à un moteur électrique.

Le deuxième réducteur peut être dépourvu sur toutes ses faces, d'entrée et de sortie, de brides d'assemblage.

L'invention a encore pour objet un réducteur convenant à la réalisation d'un ensemble tel que défini ci-dessus, comportant :
- une face d'assemblage avec un autre réducteur, dépourvue de bride,
- un arbre plein en saillie pourvu d'un taraudage d'extrémité ou un arbre creux ouvert à une extrémité sur la face d'assemblage et à l'autre extrémité sur un capot de protection amovible,
- au moins un logement non fileté pour recevoir une goupille de reprise du couple, après assemblage avec un autre carter de réducteur.

L'invention pourra être mieux comprise à la lecture de la description qui va suivre, d'exemples non limitatifs de celle-ci, et à l'examen du dessin annexé, sur lequel :
- la figure 1 représente de façon schématique, en perspective éclatée, un ensemble de deux réducteurs réalisés conformément à l'invention,
- la figure 2 est une coupe selon IV-IV de la figure 4 de l'ensemble de la figure 1, les réducteurs étant assemblés,
- la figure 3 est une coupe selon III-III de la figure 2,
- la figure 4 est une coupe selon IV-IV de la figure 2,
- la figure 5 est une coupe selon V-V de la figure 3, et
- la figure 6 représente l'ensemble en élévation, avec un moteur électrique fixé sur l'un des réducteurs.

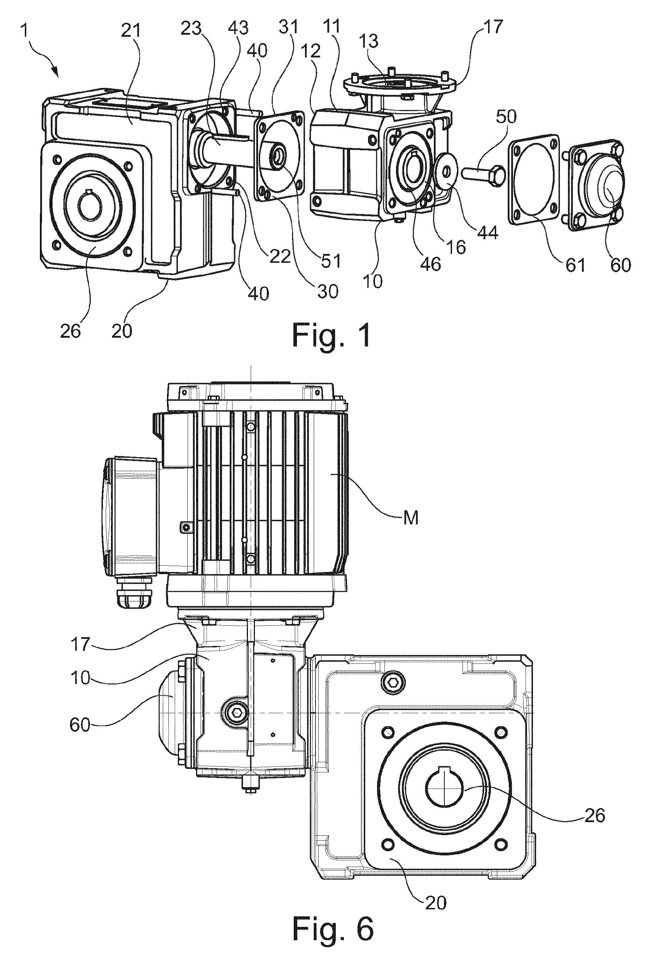

L'ensemble 1 représenté sur les figures 1 à 5 comporte un premier réducteur 10 et un deuxième réducteur 20 disposés en série, le premier réducteur 10 entrainant le deuxième 20 de façon à bénéficier d'un couple plus important. Le premier réducteur 10 comporte un carter 11 et le deuxième réducteur un carter 21, les carters 11 et 12 présentant des faces respectives d'assemblage 12 et 21 tournées l'une vers l'autre.

Les carters 11 et 21 sont par exemple réalisés par injection d'aluminium ou de fonte. Le premier réducteur 10 comporte un arbre d'entrée 13 qui tourne autour d'un axe de rotation X et qui entraîne, grâce à un filet hélicoïdal 14, une roue 15, laquelle tourne avec un arbre de sortie 16. Celui-ci est dans l'exemple considéré, creux et tourne autour d'un axe de rotation Y, par exemple perpendiculaire à l'axe X.

Des roulements 18a à 18d sont prévus à l'intérieur du carter 11 pour guider en rotation les arbres d'entrée 13 et de sortie 16 relativement en carter 11, de façon conventionnelle.

Le carter 11 du premier réducteur 10 comporte, du côté de l'arbre d'entrée 13, une bride 17 (encore parfois appelée contre bride) d'accouplement avec un moteur électrique M, visible sur la figure 6.

La bride 17 est de préférence, comme illustré, réalisée d'une seule pièce avec le carter 11. En variante, la bride 17 est rapportée.

Le deuxième réducteur 20 comporte un arbre d'entrée 23 qui entraîne, grâce à un filet hélicoïdal 24, une roue 25 tournant avec un arbre de sortie 26, autour d'un axe de rotation Z. Ce dernier est perpendiculaire à l'axe Y et à l'axe X.

Des roulements 28a à 28d assurent le guidage en rotation des arbres d'entrée 23 et de sortie 26 à l'intérieur du carter 21, de façon conventionnelle.

Un joint d'étanchéité 30 peut s'interposer entre les faces d'assemblage 12 et 22. Ce joint, plus particulièrement visible sur la figure 1, présente des trous 31 pour le passage de goupilles 40 destinées à assurer la reprise du couple entre les carters 11 et 21, ces goupilles 40 étant engagées dans des logements non filetés 43 et 44 en regard l'un de l'autre des carters 11 et 21. Le joint 30 assure une protection de la jonction entre les deux carters contre les intrusions de liquides ou de poussières et sa présence est facultative, les réducteurs étant indépendamment étanches. Dans des variantes non illustrées, les goupilles sont remplacées par des reliefs réalisés sur les carters, par exemple moulés avec ceux-ci.

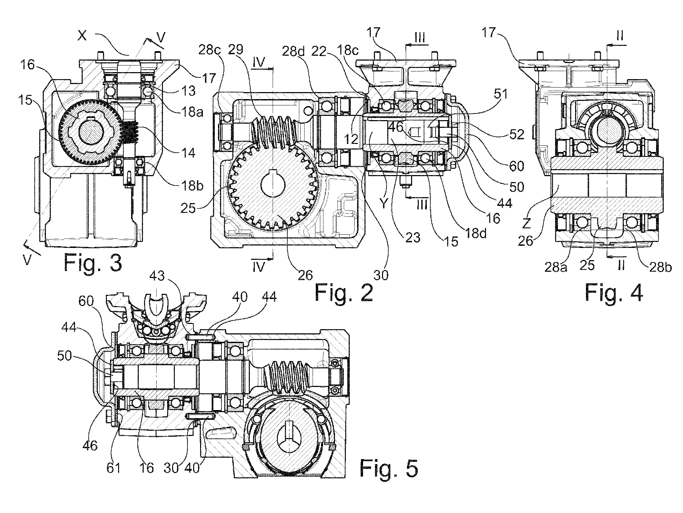

Le serrage du premier réducteur 10 sur le second 20 est assuré grâce à une vis 50 qui est engagée dans un taraudage 51 réalisé au bout de l'arbre d'entrée 23, la tête 52 de la vis 50 appuyant sur une rondelle 44 qui est elle-même en appui contre l'extrémité 46 de l'arbre 16, comme on peut le voir notamment sur la figure 2.

Un capot de protection 60 est vissé sur le premier réducteur 10, avec interposition d'un joint d'étanchéité 61, du côté du carter 11 opposé au deuxième réducteur 20. Le capot 60 est mis en place après serrage de la vis 50. Cette dernière peut être collée en fin de serrage pour réduire le risque de dévissage. Le capot 60 et le joint 61 sont facultatifs.

Lorsque l'arbre d'entrée 13 du premier réducteur 10 est entrainé en rotation par le moteur M, l'arbre de sortie 16 du premier réducteur 10 tourne et entraîne l'arbre d'entrée 23 du second réducteur 20, lequel entraîne après démultiplication l'arbre de sortie 26. L'invention n'est pas limitée à l'exemple qui vient d'être décrit.

Par exemple, le premier réducteur 10 peut être modifié de telle sorte que l'arbre de sortie 16 ne soit pas creux mais plein et le deuxième réducteur 20 peut être modifié de sorte que l'arbre d'entrée 23 ne soit pas plein mais creux de façon à recevoir l'arbre de sortie du premier réducteur. Dans ce cas, le serrage du premier réducteur sur le second est obtenu grâce à une vis engagée dans l'arbre de sortie du premier réducteur et prenant appui, directement ou indirectement, contre l'arbre d'entrée du second réducteur.

Bien que les réducteurs illustrés soient des réducteurs orthogonaux, l'invention s'applique également à la combinaison d'au moins deux réducteurs axiaux ou à la combinaison d'un réducteur axial et d'un réducteur orthogonal.

Plus de deux réducteurs peuvent être accouplés d'une manière conforme à l'invention et l'on a par exemple un troisième réducteur dont l'arbre d'entrée est entraîné par l'arbre de sortie du second réducteur, l'assemblage entre les deuxième et troisième réducteurs s'effectuant de préférence conformément à l'invention, de manière similaire à celui des premier et deuxième réducteurs.

L'expression « comportant un » doit se comprendre comme étant synonyme de « comportant au moins un ».

## Revendications

1. Ensemble d'au moins un premier (10) et un deuxième (20) réducteur comportant chacun un carter (11 ; 21), un arbre d'entrée (13 ; 23) et un arbre de sortie (16 ; 26), les arbres d'entrée et de sortie étant guidés dans leur mouvement relativement au carter, ensemble **caractérisé par le fait que** les deux carters présentent chacun au moins une face d'assemblage (12 ; 22) avec l'autre carter, dépourvue de bride et configurée de façon à permettre le montage en série des réducteurs et la reprise du couple d'un carter à l'autre.

2. Ensemble selon la revendication 1, l'arbre d'entrée (23) du deuxième réducteur (21) étant plein et en saillie (respectivement en creux), l'arbre de sortie du premier réducteur (16) étant creux (respectivement plein et en saillie) et adapté à recevoir (respectivement à s'engager dans) l'arbre d'entrée du deuxième réducteur.

3. Ensemble selon l'une des revendications précédentes, la reprise du couple entre les carters s'effectuant grâce à une ou plusieurs goupilles (40) engagées dans des logements (43 ; 44) en regard des faces d'assemblage (12 ; 22).

4. Ensemble selon l'une quelconque des revendications précédentes, le serrage entre les faces d'assemblage (12 ; 22) s'effectuant par l'intermédiaire d'une vis (50) engagée dans l'arbre d'entrée (23) du deuxième réducteur (20) (respectivement dans l'arbre de sortie du premier réducteur) et venant en appui, directement ou indirectement, sur l'arbre de sortie (16) du premier réducteur (10) (respectivement sur l'arbre d'entrée du deuxième réducteur).

5. Ensemble selon l'une quelconque des revendications précédentes, un joint d'étanchéité (30) s'interposant entre les faces d'assemblage (12 ; 22).

6. Ensemble selon les revendications 3 et 5, le joint d'étanchéité (30) présentant des trous (31) pour le passage des goupilles (40).

7. Ensemble selon l'une quelconque des revendications précédentes, les premier et deuxième réducteurs étant de tailles inégales, le deuxième réducteur (20), entraîné par le premier (10), étant de plus grandes dimensions.

8. Ensemble selon l'une quelconque des revendications précédentes, le premier réducteur (10) étant maintenu en porte-à-faux par le deuxième réducteur (20).

9. Ensemble selon l'une quelconque des revendications précédentes, les premier (10) et deuxième (20) réducteurs étant chacun à sortie orthogonale.

10. Ensemble selon l'une quelconque des revendications précédentes, les premier (10) et deuxième (20) réducteurs étant des réducteurs hélicoïdaux.

11. Ensemble selon l'une quelconque des revendications, le premier réducteur (10) comportant une bride (17) pour l'assemblage à un moteur électrique (M).

12. Ensemble selon l'une quelconque des revendications précédentes, le deuxième réducteur (20) étant dépourvu sur toutes ses faces, d'entrée et de sortie, de brides d'assemblage.

13. Réducteur (10 ; 20) convenant à la réalisation d'un ensemble selon l'une quelconque des revendications précédentes, comportant :
- une face d'assemblage (12 ; 22) avec un autre réducteur, dépourvue de bride,
- un arbre plein en saillie pourvu d'un taraudage d'extrémité ou un arbre creux ouvert à une extrémité sur la face d'assemblage et à l'autre extrémité sur un capot de protection amovible (60),
- au moins un logement non fileté (43 ; 44) pour recevoir une goupille (40) de reprise du couple après assemblage avec un autre carter de réducteur.
